# FASCICULE DE BREVET EUROPEEN

(11) **EP 3 908 738 B1**
(45) Date de publication et mention de la délivrance du brevet: **28.02.2024**
(21) Numéro de dépôt: 20707708.2
(22) Date de dépôt: 08.01.2020
(51) Int. Cl.: F01D 11/12, F01D 25/24, F01D 25/28

(54) **PROCEDE DE MONTAGE ET DE DEMONTAGE D'UN ENSEMBLE D'ANNEAU DE TURBINE**
MONTAGE- UND DEMONTAGEVERFAHREN EINER TURBINENDECKBANDANORDNUNG
METHOD OF ASSEMBLING AND DISASSEMBLING OF A TURBINE SHROUD ASSEMBLY

(30) Priorité: 08.01.2019 FR 1900154
(43) Date de publication de la demande: 17.11.2021
(73) Titulaire: SAFRAN AIRCRAFT ENGINES, 75015 Paris (FR)
(72) Inventeur: QUENNEHEN, Lucien, Henri, Jacques, 77550 MOISSY-CRAMAYEL (FR); DANIS, Antoine, Claude, Michel, Etienne, 77550 MOISSY-CRAMAYEL (FR); ILLAND, Hubert, Jean-Yves, 77550 MOISSY-CRAMAYEL (FR); JARROSSAY, Clément, 77550 MOISSY-CRAMAYEL (FR); TABLEAU, Nicolas, Paul, 77550 MOISSY-CRAMAYEL (FR)
(74) Mandataire: Cabinet Beau de Loménie
(86) Numéro de dépôt international: PCT/FR2020/050025
(87) Numéro de publication internationale: WO 2020/144435

(56) Documents cités:
- WO-A1-2018/172654
- WO-A1-2018/172655

## Description

### Domaine Technique

L'invention concerne un procédé de montage et un procédé de démontage d'un ensemble d'anneau de turbine comprenant une pluralité de secteurs d'anneau en matériau composite à matrice céramique ainsi qu'une structure de support d'anneau.

Le domaine d'application de l'invention est notamment celui des moteurs aéronautiques à turbine à gaz. L'invention est toutefois applicable à d'autres turbomachines, par exemple des turbines industrielles.

### Technique antérieure

Dans le cas d'ensembles d'anneau de turbine entièrement métalliques, il est nécessaire de refroidir tous les éléments de l'ensemble et en particulier l'anneau de turbine qui est soumis aux flux de gaz les plus chauds. Ce refroidissement a un impact significatif sur la performance du moteur puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Afin de tenter de résoudre ces problèmes, il a été envisagé de réaliser des secteurs d'anneau de turbine en matériau composite à matrice céramique (CMC).

Les matériaux CMC présentent de bonnes propriétés mécaniques les rendant aptes à constituer des éléments de structures et conservent avantageusement ces propriétés à températures élevées. L'utilisation de matériaux CMC a avantageusement permis de réduire le flux de refroidissement à imposer lors du fonctionnement et donc à augmenter la performance des turbomachines. En outre, L'utilisation de matériaux CMC permet avantageusement de diminuer la masse des turbomachines et de réduire l'effet de dilatation à chaud rencontré avec les pièces métalliques.

Toutefois, les solutions existantes proposées peuvent mettre en oeuvre un assemblage d'un secteur d'anneau en CMC avec des parties d'accrochage métalliques d'une structure de support d'anneau, ces parties d'accrochage étant soumises au flux de gaz chaud. Par conséquent, ces parties d'accrochage métalliques subissent des dilatations à chaud, ce qui peut conduire à une mise sous contrainte mécanique des secteurs d'anneau en CMC et à une fragilisation de ces derniers.

On connaît par ailleurs les documents WO 2018/172654 A1, WO 2018/172655 A1, FR 2 540 939, GB 2 480 766, EP 1 350 927, US 2014/0271145, US 2012/082540 et FR 2 955 898 qui divulguent des ensembles d'anneau de turbine.

Il existe un besoin pour améliorer le montage/démontage des ensembles d'anneau de turbine existants, et notamment les ensembles d'anneau de turbine existants comprenant un matériau CMC afin de réduire l'intensité des contraintes mécaniques auxquelles les secteurs d'anneau en CMC sont soumis lors du fonctionnement de la turbine.

Il est connu d'utiliser un ensemble d'anneau de turbine comportant un anneau en CMC et une structure de support d'anneau métallique, la structure de support d'anneau comprenant entre autre une virole centrale depuis laquelle s'étendent une bride radiale aval et une bride radiale amont entre lesquelles est maintenu l'anneau et un flasque annulaire de turbine fretté sur la virole centrale en amont de la bride radiale amont.

Ce frettage permet de conserver un contact radial entre la virole centrale et le flasque annulaire de manière à assurer un contact radial en tous points de fonctionnement et ainsi permettre un bon positionnement radial.

Toutefois, ce frettage pouvant être relativement important (de quelques millièmes de millimètre au millimètre au diamètre), il peut poser des problématiques lors du montage ou du démontage de l'anneau. En effet, en raison de l'anneau CMC aux admissibles mécaniques faibles et de sa technologie d'accrochage, il est nécessaire de pouvoir glisser les flasques annulaires dans le carter de manière maitrisée. D'autant plus que des montages et des démontages sont nécessaires pour réaliser des inspections, par exemple dans le cadre d'un essai, ou pour remplacer des pièces lorsque l'ensemble d'anneau est en service sur un aéronef.

Il est impossible avec les contraintes exercées par le frettage de venir pousser ou tirer les pièces pour les monter ou les extraire comme il est fait classiquement. En effet, dans une telle configuration de montage, pousser ou tirer directement les pièces serait une source d'usures, de rayures ou de déformations qui généreraient une situation inacceptable ensuite.

### Exposé de l'invention

L'invention vise à proposer un procédé de montage ou démontage d'un ensemble d'anneau de turbine permettant de s'affranchir des contraintes liées au frettage d'au moins un flasque sur la virole centrale d'une structure de support d'anneau d'un ensemble d'anneau de turbine, l'ensemble d'anneau de turbine permettant le maintien de chaque secteur d'anneau d'une façon déterministe, c'est-à-dire de manière à maîtriser sa position et éviter qu'il se mette à vibrer, d'une part, tout en permettant au secteur d'anneau, et par extension à l'anneau, de se déformer sous les effets des montées en température et des variations de pression, et ce notamment indépendamment des pièces métalliques en interface, et, d'autre part, tout en améliorant l'étanchéité entre le secteur hors veine et le secteur veine, notamment l'étanchéité de la cavité située au niveau de la partie radialement supérieure de l'anneau. Tout cela en simplifiant les manipulations et en réduisant leur nombre pour le montage de l'ensemble d'anneau.

Un objet de l'invention propose un procédé de montage d'un ensemble d'anneau de turbine comprenant un anneau de turbine en matériau composite à matrice céramique et une structure de support d'anneau en métal doté d'une virole centrale à partir de laquelle s'étendent en saillie une première et une seconde brides radiales à partir desquelles est maintenue l'anneau, et d'au moins un flasque annulaire en une pièce disposé en amont de l'anneau de turbine et de la première bride radiale par rapport au sens d'un flux d'air destiné à traverser l'ensemble d'anneau de turbine, ledit au moins un flasque annulaire présentant dans la direction radiale une première extrémité libre et une seconde extrémité opposée à la première extrémité, ladite seconde extrémité étant, d'une part, fixée de manière amovible à ladite première bride radiale et, d'autre part, frettée sur la virole centrale de la structure de support d'anneau.

Selon l'invention, le procédé de montage comprend avant le montage dudit au moins un flasque annulaire sur la structure de support d'anneau, une étape de déformation radiale de la structure de support d'anneau par chauffage de la virole centrale et/ou par refroidissement dudit au moins un flasque, puis une étape d'insertion dudit au moins un flasque sur la structure de support d'anneau. Selon l'invention,ladite étape de chauffage comprend une application d'une couverture chauffante enveloppant tout le périmètre circonférentiel de la surface radialement externe de la virole centrale.

Le chauffage de la virole externe permet de dilater radialement la virole centrale pour générer un jeu entre le flasque annulaire et la surface radialement interne de la virole centrale et ainsi monter le flasque plus facilement sur la virole centrale, puis une étape d'insertion dudit au moins un flasque sur la structure de support d'anneau. Selon un premier aspect du procédé de montage, l'étape de chauffage peut être maintenue jusqu'à ce que la température de la virole centrale soit supérieure ou égale à 30°C, et de préférence supérieure ou égaleà 50 °C.

L'utilisation d'une couverture chauffante permet de faire gonfler la virole centrale de manière homogène sans nécessiter plus d'un opérateur, contrairement à l'utilisation de chaufferettes qui ont le défaut de mobiliser un nombre important d'opérateurs et de générer une déformation non homogène, les chaufferettes étant des dispositifs de chauffage soufflant un flux d'air chaud.

De même l'utilisation de chalumeaux présente l'inconvénient d'engendrer des surchauffes locales qui endommagent la microstructure de CMC de l'anneau.

Un autre objet de l'invention propose un procédé de démontage d'un ensemble d'anneau de turbine comprenant un anneau de turbine en matériau composite à matrice céramique et une structure de support d'anneau en métal doté d'une virole centrale à partir de laquelle s'étendent en saillie une première et une seconde brides radiales à partir desquelles est maintenue l'anneau, et d'au moins un flasque annulaire en une pièce disposé en amont de l'anneau de turbine et de la première bride radiale par rapport au sens d'un flux d'air destiné à traverser l'ensemble d'anneau de turbine, ledit au moins un flasque annulaire présentant dans la direction radiale une première extrémité libre et une seconde extrémité opposée à la première extrémité, ladite seconde extrémité étant, d'une part, fixée de manière amovible à ladite première bride radiale et, d'autre part, frettée sur la virole centrale de la structure de support d'anneau.

Selon l'invention, le procédé de démontage comprend, avant le démontage dudit au moins un flasque annulaire de la structure de support d'anneau, une étape de déformation radiale de la structure de support d'anneau par chauffage de la virole centrale et/ou par refroidissement dudit au moins un flasque, puis une étape d'extraction dudit au moins un flasque sur la structure de support d'anneau. Selon l'invention, l'étape de chauffage comprend une application d'une couverture chauffante enveloppant tout le périmètre circonférentiel de la surface radialement externe de la virole centrale.

L'invention est exposée dans le jeu de revendications joint

### Brève description des dessins

L'invention sera mieux comprise à la lecture faite ci-après, à titre indicatif mais non limitatif, en référence aux dessins annexés sur lesquels :
[Fig. 1] La figure 1 est une vue schématique en perspective d'un exemple d'un ensemble d'anneau de turbine selon l'invention.
[Fig. 2] La figure 2 est une vue schématique en perspective éclatée de l'ensemble d'anneau de turbine de la figure 1.
[Fig. 3] La figure 3 est une vue schématique en coupe de l'ensemble d'anneau de turbine de la figure 1.
[Fig. 4] La figure 4 est une vue schématique en coupe du premier flasque annulaire amont de la figure 1.
[Fig. 5] La figure 5 représente une vue schématique en coupe de l'ensemble d'anneau de turbine de la figure 1 lors du démontage des flasques annulaires.
[Fig. 6] La figure 6 est une vue schématique en coupe d'un autre exemple de l'ensemble d'anneau de turbine.
[Fig. 7] La figure 7 présente une vue schématique en coupe d'un autre exemple de l'ensemble d'anneau de turbine.
[Fig. 8] La figure 8 présente un logigramme d'un procédé de montage de l'ensemble d'anneau de turbine selon l'invention selon un mode de mise en oeuvre.
[Fig. 9] La figure 9 présente un logigramme d'un procédé de démontage de l'ensemble d'anneau de turbine selon l'invention selon un mode de mise en oeuvre.

### Description des modes de réalisation

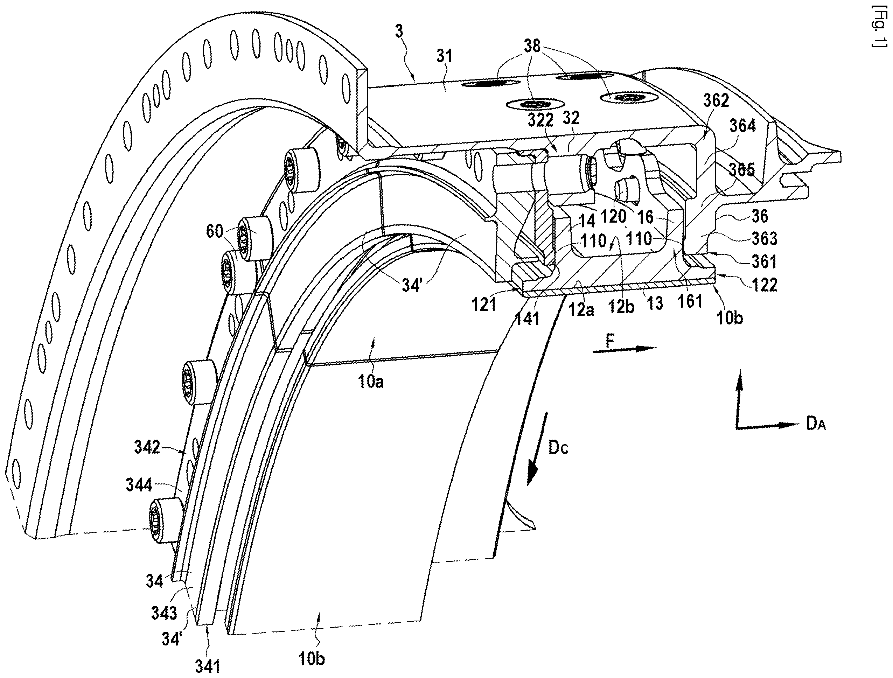

La figure 1 montre un ensemble d'anneau de turbine haute pression comprenant un anneau de turbine 1 en matériau composite à matrice céramique (CMC) et une structure métallique de support d'anneau 3. L'anneau de turbine 1 entoure un ensemble de pales rotatives (non représentées). L'anneau de turbine 1 est formé d'une pluralité de secteurs d'anneau 10, la figure 1 étant une vue en section radiale. La flèche D_{A} indique la direction axiale de l'anneau de turbine 1 tandis que la flèche D_{R} indique la direction radiale de l'anneau de turbine 1 et la flèche D_{C} indique la direction circonférentielle de l'anneau de turbine 1. Pour des raisons de simplification de présentation, la figure 1 est une vue partielle de l'anneau de turbine 1 qui est en réalité un anneau complet.

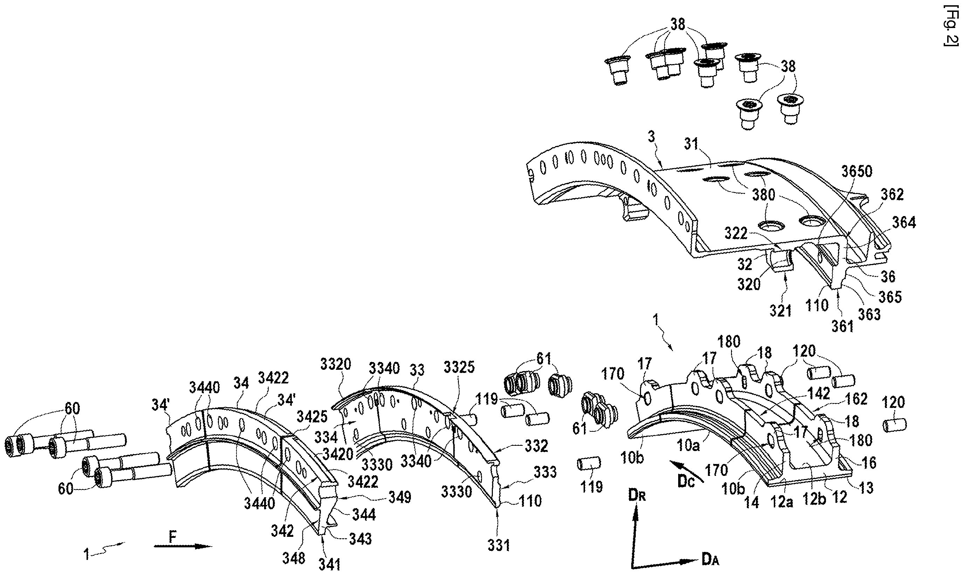

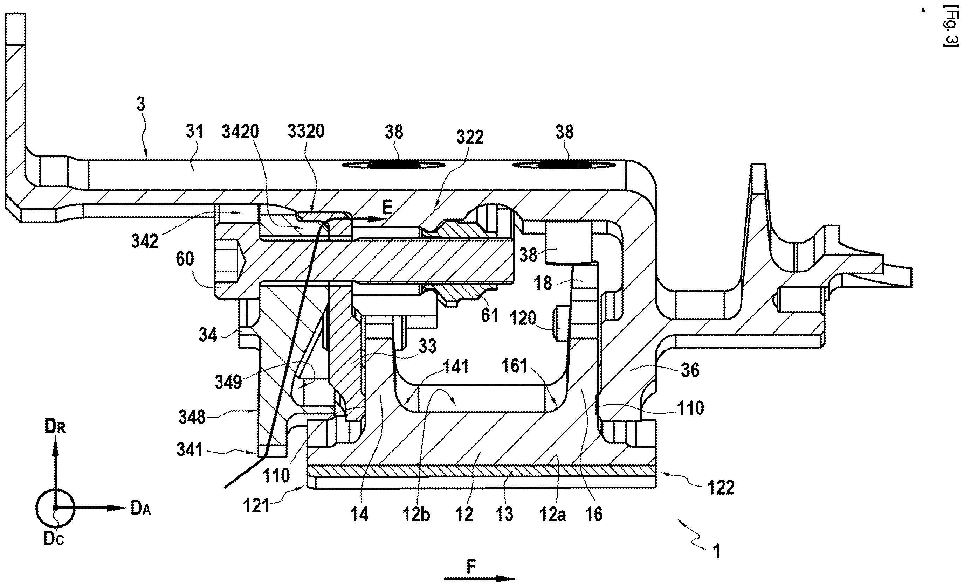

Comme illustré sur les figures 2 et 3 qui présentent respectivement une vue schématique en perspective éclatée et une vue en coupe de l'ensemble d'anneau de turbine de la figure 1, la vue en coupe étant selon un plan de coupe comprenant la direction radiale D_{R} et la direction axiale D_{A} et orthogonal à la direction circonférentielle D_{C}, chaque secteur d'anneau 10 présente, selon un plan défini par les directions axiale D_{A} et radiale D_{R}, une section sensiblement en forme de la lettre grecque π inversée. La section comprend en effet une base annulaire 12 et des pattes radiales d'accrochage amont et aval, respectivement 14 et 16. Les termes "amont" et "aval" sont utilisés ici en référence au sens d'écoulement du flux gazeux dans la turbine représenté par la flèche F sur la figure 1. Les pattes du secteur d'anneau 10 pourraient avoir une autre forme, la section du secteur d'anneau présentant une autre forme que π, comme par exemple une forme en K ou en O.

La base annulaire 12 comporte, suivant la direction radiale D_{R} de l'anneau 1, une face interne 12a et une face externe 12b opposées l'une par rapport à l'autre. La face interne 12a de la base annulaire 12 est revêtue d'une couche 13 de matériau abradable pour définir une veine d'écoulement de flux gazeux dans la turbine. Les termes "interne" et "externe" sont utilisés ici en référence à la direction radiale D_{R} dans la turbine.

Les pattes radiales d'accrochage amont et aval 14 et 16 s'étendent en saillie, suivant la direction D_{R}, à partir de la face externe 12b de la base annulaire 12 à distance des extrémités amont et aval 121 et 122 de la base annulaire 12. Les pattes radiales d'accrochage amont et aval 14 et 16 s'étendent sur toute la largeur du secteur d'anneau 10, c'est-à-dire sur tout l'arc de cercle décrit par le secteur d'anneau 10, ou encore sur toute la longueur circonférentielle du secteur d'anneau 10.

Sur les figures 1 et 2 la portion d'anneau de turbine 1 représentée comprend un secteur d'anneau 10 complet entouré de deux demis secteurs d'anneau 10. Pour une meilleure compréhension, le secteur d'anneau complet est référencé 10a et les demis secteurs d'anneau sont référencés 10b sur la figure 2.

Comme cela est illustré sur les figures 1 à 3, la structure de support d'anneau 3 qui est solidaire d'un carter de turbine comprend une virole centrale 31, s'étendant dans la direction axiale D_{A}, et ayant un axe de révolution confondu avec l'axe de révolution de l'anneau de turbine 1 lorsqu'ils sont fixés ensemble, ainsi qu'une première bride radiale annulaire 32 et une seconde bride radiale annulaire 36, la première bride radiale annulaire 32 étant positionnée en amont de la seconde bride radiale annulaire 36 qui se trouve donc en aval de la première bride radiale annulaire 32.

La seconde bride radiale annulaire 36 s'étend dans la direction circonférentielle D_{C} de l'anneau 1 et, suivant la direction radiale D_{R}, depuis la virole centrale 31 vers le centre de l'anneau 1. Elle comprend une première extrémité 361 libre et une seconde extrémité 362 solidaire de la virole centrale 31. La seconde bride radiale annulaire 36 comporte une première portion 363, une seconde portion 364, et une troisième portion 365 comprise entre la première portion 363 et la seconde portion 364. La première portion 363 s'étend entre la première extrémité 361 et la troisième portion 365, et la seconde portion 364 s'étend entre la troisième portion 365 et la seconde extrémité 362. La première portion 363 de la seconde bride radiale annulaire 36 est au contact de la bride radiale d'accrochage aval 16. L'épaisseur accrue des éléments en aval du premier flasque 33, notamment la seconde bride radiale 36, permet de diminuer les fuites diminuer les fuites axiales de l'anneau sans trop contraindre mécaniquement l'anneau, dans le cas d'un appui curviligne.

La première bride radiale annulaire 32 s'étend dans la direction circonférentielle D_{C} de l'anneau 1 et, suivant la direction radiale D_{R}, depuis la virole centrale 31 vers le centre de l'anneau 1. Elle comprend une première extrémité 321 libre et une seconde extrémité 322 solidaire de la virole centrale 31.

Comme cela est illustré sur les figures 1 à 3, l'ensemble d'anneau de turbine 1 comprend un premier flasque annulaire 33 et un second flasque annulaire 34, les deux flasques annulaires 33 et 34 étant fixés de manière amovible sur la première bride radiale annulaire 32. Les premier et second flasques annulaires 33 et 34 sont disposés en amont de l'anneau de turbine 1 par rapport au sens F d'écoulement du flux gazeux dans la turbine.

Le premier flasque annulaire 33 est disposé en aval du second flasque annulaire 34. Le premier flasque annulaire 33 est en une seule pièce alors que le second flasque annulaire 34 peut être sectorisé en une pluralité de secteurs annulaires 34' de second flasque 34 ou être en une seule pièce.

Le premier flasque annulaire 33 présente une première extrémité 331 libre et une seconde extrémité 332 fixée de manière amovible à la structure de support d'anneau 3, et plus particulièrement à la première bride radiale annulaire 32. En outre, le premier flasque annulaire 33 présente une première portion 333 et une seconde portion 334, la première portion 333 s'étendant entre la première extrémité 331 et la seconde portion 334, et la seconde portion 334 s'étendant entre la première portion 333 et la seconde extrémité 332.

Le second flasque annulaire 34 présente une première extrémité 341 libre et une seconde extrémité 342 opposée à la première extrémité 341 et au contact de la couronne centrale 31. La seconde extrémité 342 du second flasque annulaire 34 est également fixée de manière amovible à la structure de support d'anneau 3, et plus particulièrement à la première bride radiale annulaire 32. Le second flasque annulaire 34 comprend en outre une première portion 343 et une seconde portion 344, la première portion 343 s'étendant entre la première extrémité 341 et la seconde portion 344, et la seconde portion 344 s'étendant entre la première portion 343 et la seconde extrémité 342. Le second flasque annulaire 34 comprend également une face amont 348 et une face aval 349 opposée à la face amont 348, les faces amont et aval 348 et 349 s'étendant chacune dans des plans comprenant la direction radiale D_{R} et la direction circonférentielle D_{C} de l'anneau 1.

Lorsque l'ensemble d'anneau 1 est monté, la première portion 333 du premier flasque annulaire 33 se trouve en appui contre la patte radiale d'accrochage amont 14 de chacun des secteurs d'anneau 10 composant l'anneau de turbine 1, et la seconde portion 334 du premier flasque annulaire 34 se trouve en appui contre au moins une partie de la première bride radiale annulaire 32.

Les premier et second flasques annulaires amont 33 et 34 sont conformés pour avoir les premières portions 333 et 343 distantes l'une de l'autre et les secondes portions 334 et 344 en contact, les deux flasques 33 et 34 étant fixés de manière amovible sur la bride radiale annulaire amont 32 à l'aide de vis 60 et d'écrous 61 de fixation, les vis 60 traversant des orifices 3340, 3440 et 320 prévus respectivement dans les secondes portions 334 et 344 des deux flasques annulaires 33 et 34 ainsi que dans la bride radiale annulaire amont 32.

Le second flasque annulaire 34 est dédié à la reprise de l'effort du distributeur haute pression (DHP) sur l'ensemble d'anneau 1 en faisant transiter cet effort vers la ligne carter qui est plus robuste mécaniquement, c'est-à-dire vers la ligne de la structure de support d'anneau 3 comme cela est illustré par les flèches E d'effort présentées sur la figure 3. L'effort résiduel, qui passe par le premier flasque amont 33 est réduit puisque la première portion 333 du premier flasque amont 33 présente une section réduite, et est donc plus souple, ce qui permet d'appliquer un minimum d'effort sur l'anneau 1 CMC.

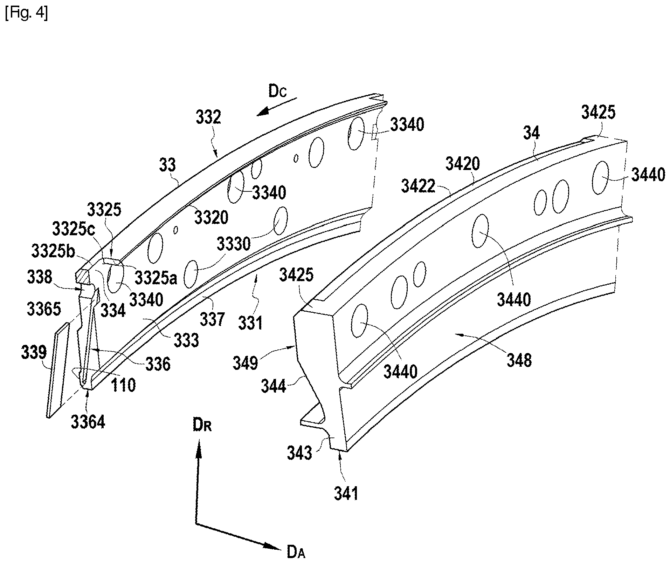

Sur la figure 4 est illustré une vue schématique en coupe du premier flasque annulaire amont de la figure 1 selon un plan de coupe comprenant la direction radiale D_{R} et la direction axiale D_{A} et traversant une fente radiale 336 du premier flasque annulaire 33.

Comme cela est illustré sur la figure 4, la première portion 333 du premier flasque annulaire 33 présente une pluralité de fentes radiales 336 s'étendant depuis la première extrémité 331. Les fentes radiales 336 présentent une première extrémité 3361 et une seconde extrémité 3362 opposée à la première extrémité 3361, la première extrémité 3361 étant à l'intérieure de la seconde extrémité 3362 dans la direction radiale D_{R}. Les premières extrémités 3361 des fentes radiales 36 sont ouvertes sur la première extrémité 331 du premier flasque annulaire 33. Chaque fente radiale 336 présente une première et une seconde surfaces 3364 parallèles dans la direction radiale D_{R} et dans la direction axiale D_{A}, la distance entre la première et la seconde surface 3364, qui correspond à l'épaisseur tangentielle des rainures, peut être comprise entre 0,1 mm et 5 mm. La longueur radiale des fentes peut être comprise entre 10 et 90 % de la longueur radiale complète du flasque amont. Une longueur radiale de fente faible favorise la diminution des fuites, mais dégrade la capacité d'accommodation des secteurs du flasque vis-à-vis des secteurs d'anneau. Une longueur radiale de fente élevée favorise l'accommodation des secteurs du flasque vis-à-vis des secteurs d'anneau mais augmente le niveau de fuite.

Chaque paire de fentes radiales 336 adjacentes délimite ainsi, entre les deux fentes radiales 336 adjacente, un secteur de première portion 337 du premier flasque annulaire 33. Chaque secteur de première portion 337 présente une forme de secteur d'anneau, c'est-à-dire un solide formé par deux arcs de cercles concentriques et de rayons différents et deux segments de droites correspondants chacun à un segment du rayon du grand arc de cercle compris entre le petit arc de cercle et le grand arc de cercle. Chaque secteur de première portion 337 est indépendant des autres secteurs de première portion 337 étant donné que les fentes radiales 36 sont ouvertes à leur première extrémité 3361.

Le premier flasque annulaire 33 comprend en outre des orifices de décharge 338, et plus particulièrement un orifice de décharge 338 par fente radiale 336. Chaque orifice de décharge 338 communique avec la seconde extrémité 3362 d'une fente radiale 36. Autrement dit, chaque orifice de décharge 338 est réalisé dans le premier flasque annulaire 33 à la seconde extrémité 3362 d'une fente radiale de sorte que la seconde extrémité 3362 d'une fente radiale soit ouverte sur l'orifice de décharge 338 correspondant.

Dans l'exemple illustré sur les figures 1 à 4, les orifices de décharge 338 sont des orifices circulaires présentant un diamètre compris entre 0,2 mm et 10 mm.

Comme cela est illustré sur la figure 4, le premier flasque annulaire 33 comprend en outre un joint inter-secteur 339 pour chaque fente radiale 336.

Chaque fente radiale 336 présente une première et une seconde surfaces 3364 de part et d'autre de la fente radiale 336. La figure 4 étant une coupe réalisée au travers d'une fente radiale 336, seule une surface 3364 de fente radiale 336 est représentée. Les première et seconde surfaces 3364 d'une fente radiale 336 sont parallèles, c'est-à-dire qu'elles sont disposées en regard l'une de l'autre sur toute la longueur radiale de la fente radiale 336.

La première surface 3364 comprend une première gorge 3365 s'étendant principalement dans la direction radiale D_{R}. De même, la seconde surface comprend une seconde gorge s'étendant principalement dans la direction radiale D_{R}. La seconde gorge s'étend en regard de la première gorge 3365 symétriquement à la première gorge 3365 par rapport au plan de coupe VI-VI.

Les première et seconde gorges 3365 d'une fente radiale 336 sont conformées pour recevoir chacune un joint inter-secteur 339, ou lamelle d'étanchéité. Le joint inter-secteur, permet ainsi d'assurer une étanchéité entre les secteurs de première portion 333 du premier flasque annulaire 33.

En outre, comme cela est illustré sur les figures 1 à 4, le premier flasque 33 comprend un épaulement 3320 annulaire s'étendant en saillie dans la direction axiale D_{A} vers l'amont depuis la seconde extrémité 332 du premier flasque 33, ainsi que, pour chaque fente radiale 336 du premier flasque 33, une encoche 3325 réalisée dans l'épaulement 3320. Chaque encoche 3325 s'étend dans un plan qui comprend la direction circonférentielle D_{C} et la direction axiale D_{A} de l'anneau et qui coupe un plan comprenant la direction axiale D_{A} et la direction radiale D_{R} et traversant la fente radiale 336.

Le second flasque 34 comprend un renfoncement 3420 annulaire qui correspond à un épaulement annulaire complémentaire de l'épaulement 3320 annulaire du premier flasque 33. Autrement dit, le renfoncement 3420 annulaire forme une butée axiale configurée pour coopérer avec ledit épaulement 3320 dans la direction axiale D_{A}.

Le renfoncement 3420 annulaire du second flasque 34 est réalisé sur le coin formé à la jonction entre la seconde extrémité 342 et la face aval 349 du second flasque 34 à partir d'une pluralité de segments de renfoncement 3422, les segments étant alignés successivement dans la direction circonférentielle D_{C} pour former le renfoncement annulaire 3420.

Le double épaulement prévu entre les deux flasques annulaires 33 et 34 et formé par l'épaulement 3320 du premier flasque annulaire 33 et le renfoncement 3420 du second flasque annulaire 34 permet de limiter les problèmes de rampement thermique entre les deux flasque annulaires 33 et 34 métalliques.

Le second flasque 34 comprend une pluralité d'ergots radiaux 3425 de centrage s'étendant depuis le renfoncement 3420 en saillie dans la direction radiale D_{R} et dans la direction axiale D_{A} vers l'aval. Dans l'exemple illustré sur les figures 1 à 4, le second flasque 34 comprend autant d'ergots radiaux de centrage 3425 que le nombre d'encoches 3320 que le premier flasque 33 comprend.

Deux segments de renfoncement 3422 adjacents du second flasque 34 sont séparés par un ergot radial 3425 de centrage. Chaque ergot radial de centrage 3425 forme une butée dans une direction circonférentielle D_{C} de l'anneau et est conformé pour coopérer avec une encoche 3325 du premier flasque 33 dans la direction circonférentielle D_{C}

Chaque encoche 3325 comprend, dans un plan comprenant la direction circonférentielle D_{C} et la direction axiale D_{A} de l'anneau, deux parois latérales 3325a parallèles s'étendant selon la direction axiale D_{A} et une paroi de fond 3325b s'étendant selon la direction circonférentielle D_{C} entre les deux parois latérales 3325a. Les parois latérales 3325a d'une l'encoche 3325 sont chacune raccordées à la paroi de fond 3325b en décrivant un arc 3325c présentant un rayon de courbure supérieur ou égal à 0,2 mm.

Dans la direction axiale D_{A}, la bride radiale annulaire aval 36 de la structure de support d'anneau 3 est séparée du premier flasque annulaire amont 33 d'une distance correspondant à l'écartement des pattes radiales d'accrochage amont et aval 14 et 16 de manière à maintenir ces dernières entre la bride radiale annulaire aval 36 et le premier flasque amont 33.

Pour maintenir en position les secteurs d'anneau 10, et donc l'anneau de turbine 1, avec la structure de support d'anneau 3, l'ensemble d'anneau comprend, pour chaque secteur d'anneau 10, deux premiers pions 119 coopérant avec la patte d'accrochage amont 14 et le premier flasque annulaire 33, et deux seconds pions 120 coopérant avec la patte d'accrochage aval 16 et la seconde bride radiale annulaire 36.

Pour chaque secteur d'anneau 10 correspondant, la première portion 333 du premier flasque annulaire 33 comprend deux orifices 3330 de réception des deux premiers pions 119, et la troisième portion 365 de la bride radiale annulaire 36 comprend deux orifices 3650 configurés pour recevoir les deux seconds pions 120.

Pour chaque secteur d'anneau 10, chacune des pattes radiales d'accrochage amont et aval 14 et 16 comprend une première extrémité, 141 et 161, solidaire de la face externe 12b de la base annulaire 12 et une seconde extrémité, 142 et 162, libre. La seconde extrémité 142 de la patte radiale d'accrochage amont 14 comprend deux premières oreilles 17 comportant chacune un orifice 170 configuré pour recevoir un premier pion 119. De manière similaire, la seconde extrémité 162 de la patte radiale d'accrochage aval 16 comprend deux secondes oreilles 18 comportant chacune un orifice 180 configuré pour recevoir un second pion 120. Les premières et secondes oreilles 17 et 18 s'étendent en saillie dans la direction radiale D_{R} de l'anneau de turbine 1 respectivement de la seconde extrémité 142 de la patte d'accrochage radiale amont 14 et de la seconde extrémité 162 de la patte d'accrochage radiale aval 16.

Les orifices 170 et 180 peuvent être circulaires ou oblongs. De préférence l'ensemble des orifices 170 et 180 comprend une portion d'orifices circulaires et une portion d'orifices oblongs. Les orifices circulaires permettent d'indexer tangentiellement les anneaux et d'empêcher qu'ils puissent se déplacer tangentiellement (notamment en cas de touche par l'aube). Les orifices oblongs permettent d'accommoder les dilatations différentielles entre le CMC et le métal. Le CMC a un coefficient de dilatation inférieur à celui du métal. A chaud, les longueurs dans le sens tangentiel du secteur d'anneau et de la portion de carter en vis-à-vis vont donc être différentes. S'il n'y avait que des orifices circulaires, le carter métallique imposerait ses déplacements à l'anneau en CMC, ce qui serait source de contraintes mécaniques très élevées dans le secteur d'anneau. Avoir des trous oblongs dans l'ensemble d'anneau permet au pion de coulisser dans ce trou et d'éviter le phénomène de sur-contrainte mentionné ci-dessus. Dès lors, deux schémas de perçages peuvent être imaginés : un premier schéma de perçage, pour un cas à trois oreilles, comprendrait un orifice circulaire sur une bride radiale d'accrochage et deux orifices oblongs tangentiels sur l'autre bride radiale d'accrochage, et un deuxième schéma de perçage, pour un cas à au moins quatre oreilles, comprendrait un orifice circulaire et un orifice oblong par bride radiale d'accrochage en vis-à-vis à chaque fois. D'autres cas annexes peuvent être envisagés également.

Pour chaque secteur d'anneau 10, les deux premières oreilles 17 sont positionnées à deux positions angulaires différentes par rapport à l'axe de révolution de l'anneau de turbine 1. De même, pour chaque secteur d'anneau 10, les deux secondes oreilles 18 sont positionnées à deux positions angulaires différentes par rapport à l'axe de révolution de l'anneau de turbine 1.

Pour chaque secteur d'anneau 10, le premier flasque annulaire 33 et la seconde bride radiale annulaire 36 comprennent en outre des surfaces d'appuis 110 montées sur les faces du premier flasque annulaire 33 et de la seconde bride radiale annulaire 36 en contact respectivement avec la patte radiale d'accrochage amont 14 et la patte radiale d'accrochage aval 16, c'est-à-dire sur la face aval du premier flasque annulaire 33 et sur la face amont de la seconde bride radiale annulaire 36.

Les surfaces d'appuis 110 peuvent être curvilignes, c'est-à-dire s'étendant selon la direction circonférentielle D_{C}, ou bien rectilignes, c'est-à-dire s'étendant selon une tangente à la direction circonférentielle D_{C} en un point du secteur d'anneau 10.

Les surfaces d'appui 110 sont situés sous les orifices 3330 de réception des deux premiers pions 119, c'est-à-dire à l'intérieure des orifices 3330 selon la direction radiale.

Dans une variante, les surfaces d'appui pourraient être montées sur les faces des pattes radiales d'accrochage amont et aval 14 et 16 en contact respectivement avec le premier flasque annulaire amont 33 et la bride radiale annulaire aval 36.

Le maintien radial de l'anneau 1 est assuré par le premier flasque annulaire 33 qui est plaqué sur la première bride radiale annulaire 32 de la structure de support d'anneau 3 et sur la patte radiale d'accrochage amont 14. Le premier flasque annulaire 33 assure l'étanchéité entre la cavité veine et la cavité hors veine de l'anneau.

Le second flasque annulaire 34 assure la liaison entre la partie aval du DHP, la structure de support d'anneau 3, ou carter, par contact surfacique radial, et le premier flasque annulaire 33 par contact surfacique axial.

La structure de support d'anneau 3 comprend en outre des pions radiaux 38 qui permettent de plaquer l'anneau en position radiale basse c'est-à-dire vers la veine, de manière déterministe. Il y a en effet un jeu entre les pions axiaux et les alésages sur l'anneau pour compenser la dilatation différentielle entre le métal et les éléments en CMC qui s'opère à chaud. Les pions radiaux 38 coopèrent avec des orifices 380 réalisés selon la direction radiale D_{R} dans la couronne centrale 31 de la structure de support d'anneau 3.

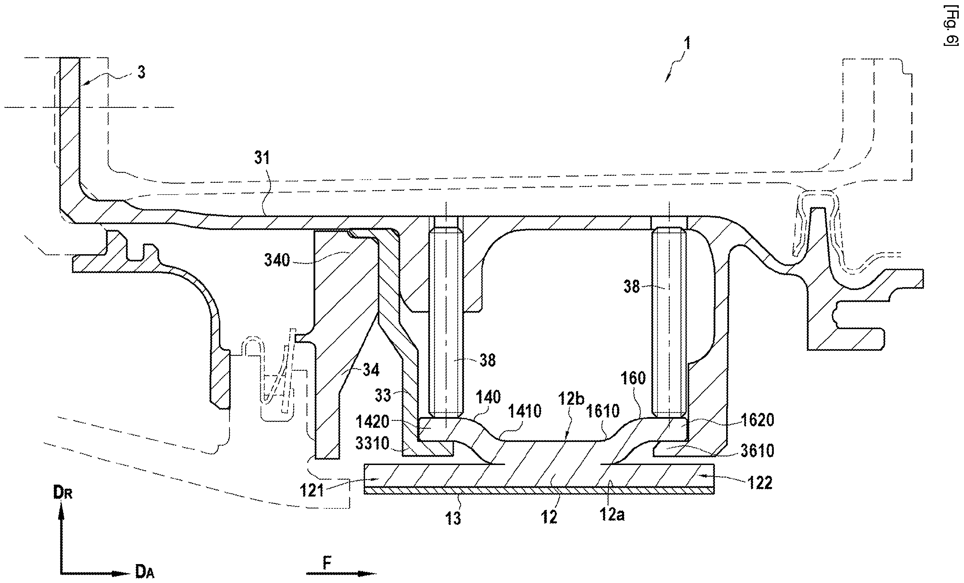

Sur la figure 6 est présentée une vue schématique en coupe d'un autre exemple de l'ensemble d'anneau de turbine.

L'exemple illustré sur la figure 6 diffère d'exemple illustré sur les figures 1 à 4 en ce que le secteur d'anneau 10 présente, dans le plan défini par les directions axiale D_{A} et radiale D_{R}, une section en forme de K comprenant une base annulaire 12 avec, suivant la direction radiale D_{R} de l'anneau, une face interne 12a revêtue d'une couche 13 de matériau abradable formant une barrière thermique et environnementale et qui définit la veine d'écoulement de flux gazeux dans la turbine. Des pattes radiales d'accrochage amont et aval 140, 160 sensiblement en forme de S s'étendent, suivant la direction radiale D_{R}, à partir de la face externe 12b de la base annulaire 12 sur toute la largeur de celle-ci et au-dessus des portions d'extrémité circonférentielles amont et aval 121 et 122 de la base annulaire 12.

Les pattes radiales d'accrochage 140 et 160 présentent une première extrémité, référencée respectivement 1410 et 1610, solidaire de la base annulaire 12 et une seconde extrémité libre, référencée respectivement 1420 et 1620. Les extrémités libres 1420 et 1620 des pattes radiales d'accrochage amont et aval 140 et 160 s'étendent soit parallèlement au plan dans lequel s'étend la base annulaire 12 , c'est-à-dire dans selon un plan circulaire, soit de manière rectiligne alors que les pattes d'accrochage 140 et 160 s'étendent de manière annulaire. Dans cette seconde configuration où les extrémités sont rectilignes et les pattes d'accrochages annulaires, dans le cas d'une éventuelle bascule de l'anneau pendant le fonctionnement, les appuis surfaciques deviennent alors des appuis linéiques ce qui offre une étanchéité plus importante que dans le cas d'appuis ponctuels. La seconde extrémité 1620 de la patte radiale d'accrochage aval 160 est maintenue entre une portion 3610 de la seconde bride radiale annulaire 36 s'étendant en saillie dans la direction axiale D_{A} depuis la première extrémité 361 de la seconde bride radiale annulaire 36 dans le sens opposé au sens du flux F et l'extrémité libre de la vis 38 associée, c'est-à-dire la vis opposée à la tête de vis. La seconde extrémité 1410 de la patte radiale d'accrochage amont 140 est maintenue entre une portion 3310 du premier flasque annulaire 33 s'étendant en saillie dans la direction axiale D_{A} depuis la première extrémité 331 du premier flasque annulaire 33 dans le sens du flux F et l'extrémité libre de la vis 38 associée.

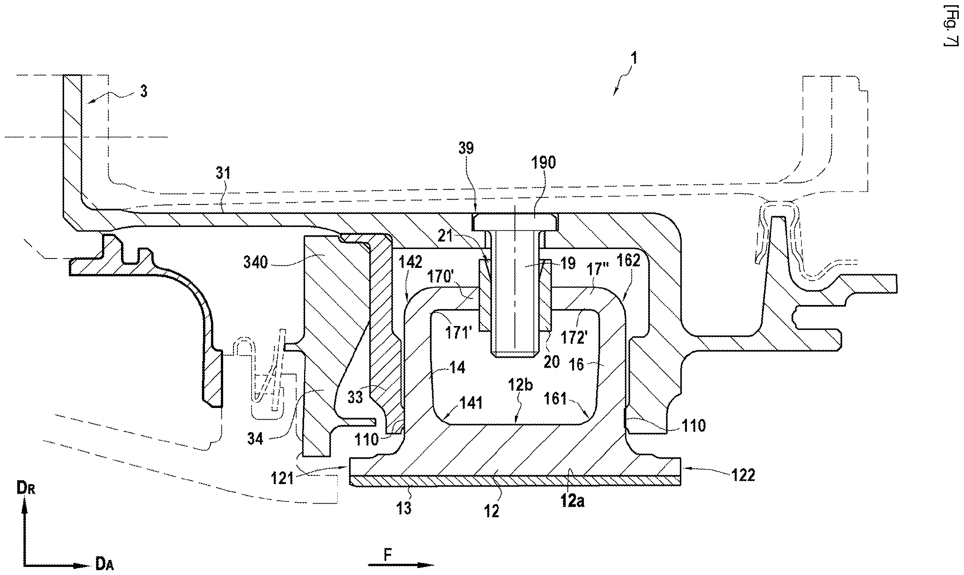

Sur la figure 7 est présentée une vue schématique en coupe d'un exemple de l'ensemble d'anneau de turbine.

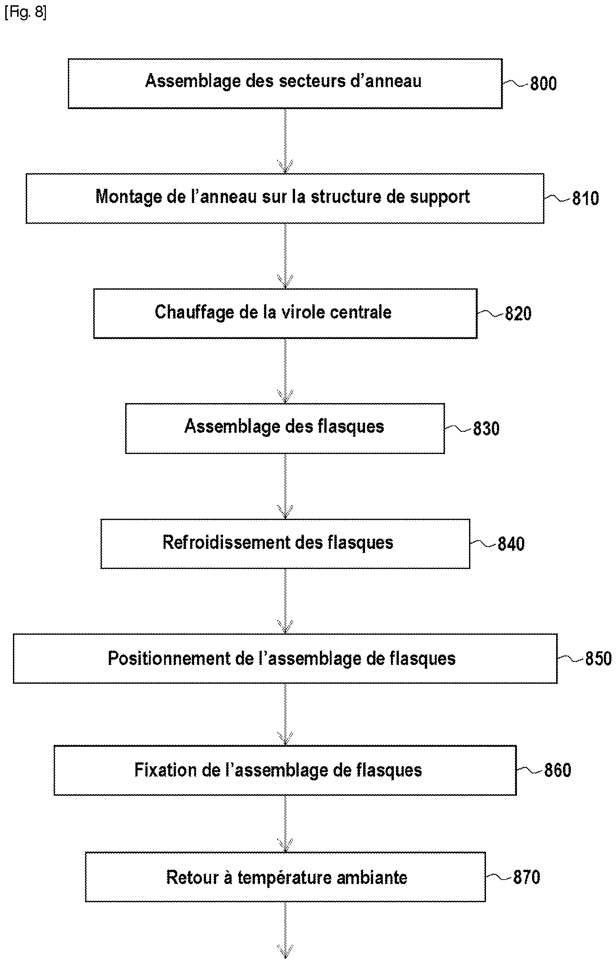

L'exemple illustré sur la figure 8 diffère d'autre exemple illustré sur les figures 1 à 4 en ce que le secteur d'anneau 10 présente dans le plan défini par les directions axiale D_{A} et radiale D_{R}, sur une partie du secteur d'anneau 10, une section en forme de O au lieu d'une section en forme de π inversé, la section d'anneau 10 étant fixée à la structure de support d'anneau 3 à l'aide d'une vis 19 et d'une pièce de fixation 20, les vis 38 étant supprimées.

Dans l'exemple illustré sur la figure 7, le secteur d'anneau 10 comprend une patte axiale d'accrochage 17' s'étendant entre les pattes radiales d'accrochage amont et aval 14 et 16. La patte axiale d'accrochage 17' s'étend plus précisément, dans la direction axiale D_{A}, entre la seconde extrémité 142 de la patte radiale d'accrochage amont 14 et la seconde extrémité 162 de la patte radiale d'accrochage aval 16.

La patte axiale d'accrochage 17' comprend une extrémité amont 171' et une extrémité aval 172' séparées par une partie centrale 170'. Les extrémités amont et aval 171' et 172' de la patte d'accrochage axiale 17' s'étendent en saillie, dans la direction radiale D_{R}, de la seconde extrémité 142, 162 de la patte radiale d'accrochage 14, 16 à laquelle elles sont couplées, de manière à avoir une partie centrale 170' de patte axiale d'accrochage 17' surélevée par rapport aux secondes extrémités 142 et 162 des pattes radiales d'accrochage amont et aval 14 et 16.

Pour chaque secteur d'anneau 10, l'ensemble d'anneau de turbine comprend une vis 19 et une pièce de fixation 20. La pièce de fixation 20 est fixée sur la patte axiale d'accrochage 17'.

La pièce de fixation 20 comprend en outre un orifice 21 doté d'un taraudage coopérant avec un filetage de la vis 19 pour fixer la pièce de fixation 20 à la vis 19. La vis 19 comprend une tête de vis 190 dont le diamètre est supérieur au diamètre d'un orifice 39 réalisé dans la virole centrale 31 de la structure de support de l'anneau 3 au travers duquel la vis 19 est insérée avant d'être vissée à la pièce de fixation 20.

La solidarisation radiale du secteur d'anneau 10 avec la structure de support d'anneau 3 est réalisée à l'aide de la vis 19, dont la tête 190 est en appui sur la couronne centrale 31 de la structure de support de l'anneau 3, et de la pièce de fixation 20 vissée à la vis 19 et fixée à la patte axiale d'accrochage 17' du secteur d'anneau 10, la tête de vis 190 et la pièce de fixation 20 exerçant des forces de sens opposés pour maintenir ensemble l'anneau 1 et la structure de support d'anneau 3. Dans une variante, le maintien radial de l'anneau vers le bas peut être assuré à l'aide de quatre pions radiaux plaqués sur la patte axiale d'accrochage 17', et le maintien radial vers le haut de l'anneau peut être assuré par une tête pioche, solidaire de la vis 19, placée sous l'anneau dans la cavité entre la patte axiale d'accrochage 17' et la face externe 12b de la base annulaire.

Dans les exemples illustrés sur les figures 6 et 7, la seconde extrémité 342 du second flasque annulaire 34 comprend une butée de contact 340 s'étendant en saillie dans la direction axiale D_{A} entre le second flasque annulaire 34 et le premier flasque annulaire 33. La butée de contact 340 permet de maintenir une distance entre la première extrémité 331 du premier flasque annulaire 33 et la première extrémité 341 du second flasque annulaire 34 lors du basculement du second flasque annulaire 34 induit par l'effort DHP.

On décrit maintenant un procédé de réalisation d'un ensemble d'anneau de turbine correspondant à celui représenté sur la figure 1, c'est-à-dire selon l'exemple illustré sur les figures 1 à 4.

Chaque secteur d'anneau 10 décrit ci-avant est réalisé en matériau composite à matrice céramique (CMC) par formation d'une préforme fibreuse ayant une forme voisine de celle du secteur d'anneau et densification du secteur d'anneau par une matrice céramique.

Pour la réalisation de la préforme fibreuse, on peut utiliser des fils en fibres céramique ou des fils en fibres de carbone.

La préforme fibreuse est avantageusement réalisée par tissage tridimensionnel, ou tissage multicouches avec aménagement de zones de déliaison permettant d'écarter les parties de préformes correspondant aux pattes d'accrochage 14 et 16 des secteurs 10.

Le tissage peut être de type interlock, comme illustré. D'autres armures de tissage tridimensionnel ou multicouches peuvent être utilisées comme par exemple des armures multi-toile ou multi-satin. On pourra se référer au document WO 2006/136755.

Après tissage, l'ébauche peut être mise en forme pour obtenir une préforme de secteur d'anneau qui est consolidée et densifiée par une matrice céramique, la densification pouvant être réalisée notamment par infiltration chimique en phase gazeuse (CVI) qui est bien connue en soi. Dans une variante, la préforme textile peut être un peu durcie par CVI pour qu'elle soit suffisamment rigide pour être manipulée, avant de faire remonter du silicium liquide par capillarité dans le textile pour faire la densification (« Melt Infiltration »).

Un exemple détaillé de fabrication de secteurs d'anneau en CMC est notamment décrit dans le document US 2012/0027572.

La structure de support d'anneau 3 est quant à elle réalisée en un matériau métallique tel qu'un alliage à base de nickel, de cobalt ou de titane.

La réalisation de l'ensemble d'anneau de turbine se poursuit par le montage des secteurs d'anneau 10 sur la structure de support d'anneau 3.

La figure 8 présente un logigramme d'un procédé de montage de l'ensemble d'anneau de turbine selon l'invention selon un mode de mise en oeuvre.

Dans une première étape 800, les secteurs d'anneau 10 sont assemblés ensemble sur un outil annulaire de type « araignée » comportant, par exemple, des ventouses configurées pour maintenir chacune un secteur d'anneau 10.

Puis les deux seconds pions 120 sont insérés dans les deux orifices 3650 prévus dans la troisième partie 365 de la seconde bride radiale annulaire 36 de la structure de support d'anneau 3.

L'anneau 1 est ensuite monté, dans une étape suivante 810, sur la structure de support d'anneau 3 en insérant chaque second pion 120 dans chacun des orifices 180 des secondes oreilles 18 des brides radiales d'accrochage aval 16 de chaque secteur d'anneau 10 composant l'anneau 1.

On place ensuite tous les premiers pions 119 dans les orifices 170 prévus dans les première oreilles 17 de la patte radiale d'accrochage 14 de l'anneau 1.

Dans une étape suivante 820, on enveloppe la surface radialement externe de la virole centrale 31 de la structure de support d'anneau 3 d'une couverture chauffante et on chauffe l'enveloppe centrale pour dilater radialement la virole centrale 31 suffisamment pour l'insertion des flasques annulaires 33 et 34.

Ensuite, préalablement au montage des premier et second flasques 33 et 34 sur la structure de support d'anneau 3, dans une étape 830 qui peut être réalisée pendant au moins l'une des étapes précédentes 800 à 810, on chauffe le second flasque annulaire 34 pour le dilater radialement et on refroidit le premier flasque annulaire 33 pour le rétreindre radialement. Puis, on positionne le second flasque annulaire 34 contre le premier flasque annulaire 33 en insérant les ergots radiaux de centrage 3425 du second flasque annulaire 34 dans chacune des encoches 3325 du premier flasque annulaire 33, et on frette les deux flasques annulaires 33 et 34 l'un sur l'autre en laissant les deux flasques revenir à température ambiante, ou en amenant les deux flasques à une même température.

Une fois les deux flasques assemblés ensemble, dans une étape suivante 840 qui peut être réalisée pendant au moins l'une des étapes précédentes 800 à 810, on refroidit l'assemblage formé par le premier flasque annulaire 33 et le second flasque annulaire 34 en appliquant sur l'assemblage de la carboglace afin d'obtenir un rétreint des pièces.

Puis, dans une étape suivante 850, on vient positionner l'assemblage refroidi des deux flasques 33 et 34 sur la structure de support d'anneau 3, en plaçant la seconde portion 334 du premier flasque annulaire 33 en appui contre la première bride radiale et les surfaces d'appui 110 de la première portion 333 du premier flasque annulaire 33 en appui contre la première patte d'accrochage 14 en ajustant le premier flasque annulaire 33 pour que les premiers pions 117 s'insèrent dans les orifices 3330 de la première portion 333 du premier flasque annulaire 33.

Puis, pour fixer les deux flasques amont 33 et 34 ensemble à la structure de support d'anneau 3, dans une étape suivante 860, on insère des vis 60 dans les orifices 3440, 3340 et 320, coaxiaux, prévus dans la seconde portion 344 du second flasque amont 34, dans la deuxième portion 334 du premier flasque et dans la bride radiale annulaire amont 32 et on serre chacune des vis 60 à l'aide d'un écrou 61.

Puis dans une étape finale 870, la couverture chauffante est retirée de la virole centrale 31 pour que celle-ci se rétracte et obtenir ainsi le frettage des premier et second flasques annulaires 33 et 34 sur la virole centrale 31 de la structure de support d'anneau 3.

La carboglace peut être retirée des flasques 33 et 34 après leur montage sur l'anneau ou bien à l'étape 860.

L'anneau 1 est ainsi maintenu en position axialement à l'aide du premier flasque annulaire 33 et de la seconde bride radiale annulaire 36 en appui respectivement en amont et en aval sur leurs surfaces d'appuis 110 respectives. Lors de l'installation du premier flasque annulaire 33, une précontrainte axiale peut être appliquée sur le premier flasque annulaire 33 et sur la patte radiale d'accrochage amont 14 pour pallier l'effet de dilatation différentielle entre le matériau CMC de l'anneau 1 et le métal de la structure de support d'anneau 3. Le premier flasque annulaire 33 est maintenu en contrainte axiale par des éléments mécaniques placés en amont comme cela est illustré en pointillés sur les figures 6 et 7.

L'anneau 1 est maintenu en position radialement à l'aide des premiers et seconds pions 119 et 120 coopérant avec les premières et secondes oreilles 17 et 18 et les orifices 3340 et 3650 du premier flasque annulaire 33 et de la bride radiale annulaire 36.

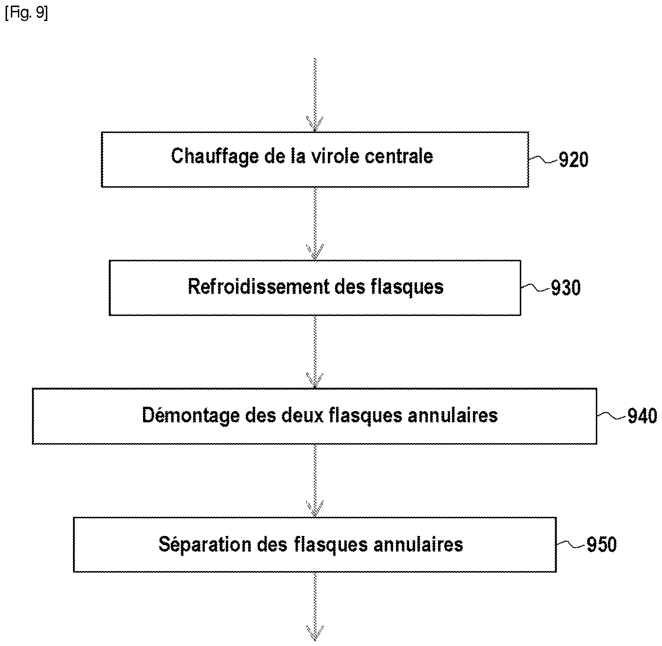

La figure 9 présente un logigramme d'un procédé de démontage de l'ensemble d'anneau de turbine selon l'invention selon un mode de mise en oeuvre. Le démontage de l'ensemble d'anneau de turbine peut être réalisé par exemple dans le cadre d'une opération de maintenance des flasques annulaires 33 et 34 ou de l'anneau.

Dans une première étape 920, on enveloppe la surface radialement externe de la virole centrale 31 de la structure de support d'anneau 3 d'une couverture chauffante et on chauffe l'enveloppe centrale pour dilater radialement la virole centrale 31.

Dans une étape 930 réalisée simultanément à l'étape 920, on refroidit le premier flasque annulaire 33 et le second flasque annulaire 34 en appliquant sur chacun de la carboglace dessus afin d'obtenir un rétreint des pièces.

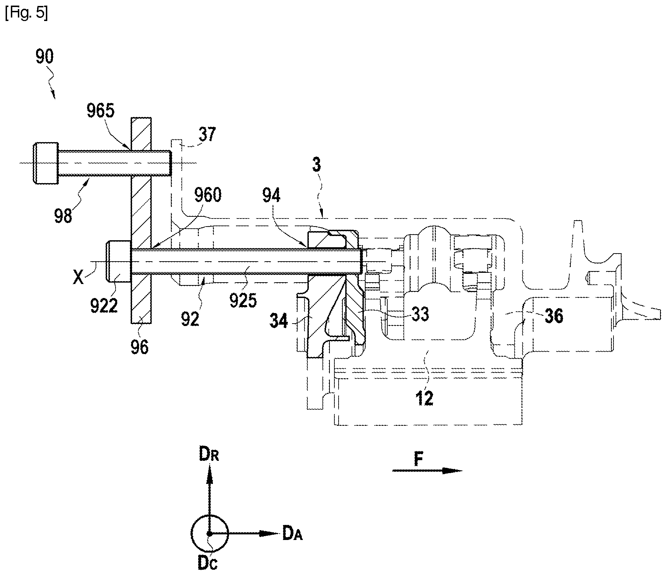

Puis, dans une étape suivante 940, on extrait le premier flasque 33 et le second flasque 34 ensemble de la structure de support d'anneau 3 à l'aide d'un outil d'extraction 90. Sur la figure 5 est illustrée schématiquement une vue en coupe de l'ensemble d'anneau de turbine de la figure 1 lors du démontage des flasques annulaires 33 et 34 à l'aide de l'outil d'extraction 90.

Comme cela est illustré sur la figure 5, on fixe une pluralité de premières vis 92 à pas fin dans des premiers orifices taraudés 94 traversant à la fois le second flasque 34 et le premier flasque 33 selon un même axe. Les premières vis 92 sont solidaires d'une plaque d'extraction 96, la tête 922 des premières vis 92 étant en appuis contre la plaque d'extraction 96, et la tige 925 des premières vis 92 traversant la plaque d'extraction 96 via des deuxièmes orifices 960 non taraudés réalisés dans la plaque d'extraction 96. On place ensuite en appui des secondes vis 98 contre une partie 37 de la structure de support d'anneau 3 distincte du second flasque 34 et s'étendant dans un plan radiale orthogonal à la direction axiale D_{A}. Les secondes vis 98 sont en prise avec des troisièmes orifices 965 taraudés réalisés dans la plaque d'extraction 96. Puis, on actionne les secondes vis 98 pour éloigner la plaque d'extraction 96 de la structure de support d'anneau 3 et extraire les deux flasques 33 et 34 de la structure de support d'anneau 3.

Comme illustré sur la figure 9, dans une étape suivante 950, on sépare ensuite le premier flasque annulaire 33 du second flasque annulaire.

## Revendications

1. Procédé de montage d'un ensemble d'anneau de turbine comprenant un anneau de turbine (1) en matériau composite à matrice céramique et une structure de support d'anneau (3) en métal dotée d'une virole centrale (31) à partir de laquelle s'étendent en saillie une première et une seconde brides radiales (32, 36) à partir desquelles est maintenu l'anneau (1), et d'au moins un flasque annulaire (33) en une pièce disposé en amont de l'anneau de turbine (1) et de la première bride radiale (32) par rapport au sens d'un flux d'air (F) destiné à traverser l'ensemble d'anneau de turbine, ledit au moins un flasque annulaire (33) présentant dans la direction radiale (D_{R}) une première extrémité (331) libre et une seconde extrémité (332) opposée à la première extrémité (331), ladite seconde extrémité étant, d'une part, fixée de manière amovible à ladite première bride radiale (32) et, d'autre part, frettée sur la virole centrale (31) de la structure de support d'anneau (3),
**caractérisé en ce que** le procédé de montage comprend, avant le montage (840) dudit au moins un flasque annulaire (33) sur la virole centrale (31) de la structure de support d'anneau (3), une étape (820) de déformation radiale de la structure de support d'anneau (3) par chauffage de la virole centrale (31) via une application d'une couverture chauffante enveloppant tout le périmètre circonférentiel de la surface radialement externe de la virole centrale (31), puis une étape (840) d'insertion dudit au moins un flasque (33) sur la structure de support d'anneau (3).

2. Procédé de montage selon la revendication 1, dans lequel l'étape (820) de chauffage est maintenue jusqu'à ce que la température de la virole centrale soit supérieure ou égale à 30°C.

3. Procédé de montage selon l'une des revendications 1 ou 2, comprenant en outre, avant le montage (840) dudit au moins un flasque annulaire (33) sur la structure de support d'anneau (3), une étape (830) de refroidissement dudit au moins un flasque annulaire (3) afin d'obtenir un rétreint dudit au moins un flasque annulaire (33).

4. Procédé de montage selon l'une des revendications 1 à 3, dans lequel le montage de l'ensemble d'anneau est réalisé en position verticale par rapport au sol, l'anneau de turbine (1) et la structure de support d'anneau (3) étant positionnés avec la direction axiale (D_{A}) de l'anneau parallèle à la direction verticale.

5. Procédé de démontage d'un ensemble d'anneau de turbine comprenant un anneau de turbine (1) en matériau composite à matrice céramique et une structure de support d'anneau (3) en métal dotée d'une virole centrale (31) à partir de laquelle s'étendent en saillie une première et une seconde brides radiales (32, 36) à partir desquelles est maintenue l'anneau (1), et d'au moins un flasque annulaire (33) en une pièce disposé en amont de l'anneau de turbine (1) et de la première bride radiale (32) par rapport au sens d'un flux d'air (F) destiné à traverser l'ensemble d'anneau de turbine, ledit au moins un flasque annulaire (33) présentant dans la direction radiale (D_{R}) une première extrémité (331) libre et une seconde extrémité (332) opposée à la première extrémité (331), ladite seconde extrémité étant, d'une part, fixée de manière amovible à ladite première bride radiale (32) et, d'autre part, frettée sur la virole centrale (31) de la structure de support d'anneau (3),
**caractérisé en ce que** le procédé de démontage comprend, avant le démontage (940) dudit au moins un flasque annulaire (33) de la virole centrale (31) de la structure de support d'anneau (3), une étape (920) déformation radiale de la structure de support d'anneau (3) par chauffage de la virole centrale (31) via une application d'une couverture chauffante enveloppant tout le périmètre circonférentiel de la surface radialement externe de la virole centrale (31), puis une étape d'extraction (950) dudit au moins un flasque (33) de la structure de support d'anneau (3).

6. Procédé de démontage selon la revendication 5, dans lequel l'étape (920) de chauffage est maintenue jusqu'à ce que la température de la virole centrale (31) soit supérieure ou égale à 50°C.

7. Procédé de démontage selon l'une des revendications 5 ou 6, comprenant en outre, simultanément à l'étape (920) de chauffage de la virole centrale (31), une étape (930) de refroidissement dudit au moins un flasque annulaire (33).

8. Procédé de démontage selon l'une des revendications 5 à 7, dans lequel l'étape (930) de refroidissement comprend l'application d'une convection forcée au moyen d'un ventilateur visant ledit au moins un flasque (33).

9. Procédé de démontage selon l'une des revendications 5 à 8, dans lequel l'étape (930) de refroidissement comprend l'application de carboglace sur ledit au moins un flasque (33) de manière à avoir un rétreint dudit au moins un flasque (33).

10. Procédé de démontage selon l'une des revendications 5 à 9, dans lequel l'étape (950) d'extraction dudit au moins un flasque (33) comprend une fixation d'une pluralité de premières vis (92)dans des orifices taraudés (94) dudit au moins un flasque (33), les premières vis (92) étant solidaire d'une plaque d'extraction (96), puis la mise en appui de secondes vis (98) contre une bride de la structure de support d'anneau (3), les secondes vis (98) étant en prise avec des orifices taraudés (965) de la plaque d'extraction (96), puis l'actionnement des secondes vis (98) pour éloigner la plaque d'extraction (96) de la structure de support d'anneau (3) de sorte à extraire ledit au moins un flasque (33) de la structure de support d'anneau (3).

11. Procédé de démontage selon l'une des revendications 5 à 10, dans lequel le démontage de l'ensemble d'anneau est réalisé en position verticale par rapport au sol, l'anneau de turbine (1) et la structure de support d'anneau (3) étant positionnés avec la direction axiale (D_{A}) de l'anneau parallèle à la direction verticale.

## Patentansprüche

1. Verfahren zur Montage einer Turbinenring-Anordnung umfassend einen Turbinenring (1) aus Verbundmaterial mit keramischer Matrix und eine Ringträgerstruktur (3) aus Metall, die mit einem Zentralmantel (31), von welchem sich ein erster und ein zweiter radialer Stegflansch (32, 36) wegragend erstrecken, von welchen der Ring (1) gehalten wird, sowie mit zumindest einem ringförmigen Flansch (33) in einem Stück ausgestattet ist, der stromaufwärts des Turbinenrings (1) und des ersten radialen Stegflansches (32) in Bezug auf die Richtung eines Luftstroms (F), der dazu bestimmt ist, die Turbinenringanordnung zu durchqueren, angeordnet ist, wobei der zumindest eine ringförmige Flansch (33) in der radialen Richtung (D_{R}) ein erstes freies Ende (331) und ein zweites Ende (332) aufweist, das dem ersten Ende (331) entgegengesetzt ist, wobei das zweite Ende einerseits auf abnehmbare Weise an dem ersten radialen Stegflansch (32) fixiert ist, und andererseits auf den Zentralmantel (31) der Ringträgerstruktur (3) aufgeschrumpft ist,
**dadurch gekennzeichnet, dass** das Verfahren zur Montage vor der Montage (840) des zumindest einen ringförmigen Flansches (33) auf dem Zentralmantel (31) der Ringträgerstruktur (3) einen Schritt (820) der radialen Verformung der Ringträgerstruktur (3) durch Erwärmen des Zentralmantels (31) durch Anwendung einer Heizdecke umfasst, die den gesamten Umfangsverlauf der radial äußeren Oberfläche des Zentralmantels (31) einhüllt, und anschließend einen Schritt (840) des Aufsetzens des zumindest einen Flansches (33) auf die Ringträgerstruktur (3).

2. Verfahren zur Montage nach Anspruch 1, wobei der Schritt (820) der Erwärmung gehalten wird, bis die Temperatur des Zentralmantels mehr als oder gleich 30 °C beträgt.

3. Verfahren zur Montage nach einem der Ansprüche 1 oder 2, umfassend ferner vor der Montage (840) des zumindest einen ringförmigen Flansches (33) auf der Ringträgerstruktur (3) einen Schritt (830) der Abkühlung des zumindest einen ringförmigen Flansches (3), um eine Schrumpfung des zumindest einen ringförmigen Flansches (33) zu erzielen.

4. Verfahren zur Montage nach einem der Ansprüche 1 bis 3, wobei die Montage der Ringanordnung in vertikaler Position in Bezug auf den Boden erfolgt, wobei der Turbinenring (1) und die Ringträgerstruktur (3) mit der axialen Richtung (D_{A}) des Rings parallel zu der vertikalen Richtung positioniert werden.

5. Verfahren zur Demontage einer Turbinenring-Anordnung umfassend einen Turbinenring (1) aus Verbundmaterial mit keramischer Matrix und eine Ringträgerstruktur (3) aus Metall, die mit einem Zentralmantel (31), von welchem sich ein erster und ein zweiter radialer Stegflansch (32, 36) wegragend erstrecken, von welchen der Ring (1) gehalten wird, sowie mit zumindest einem ringförmigen Flansch (33) in einem Stück ausgestattet ist, der stromaufwärts des Turbinenrings (1) und des ersten radialen Stegflansches (32) in Bezug auf die Richtung eines Luftstroms (F), der dazu bestimmt ist, die Turbinenringanordnung zu durchqueren, angeordnet ist, wobei der zumindest eine ringförmige Flansch (33) in der radialen Richtung (D_{R}) ein erstes freies Ende (331) und ein zweites Ende (332) aufweist, das dem ersten Ende (331) entgegengesetzt ist, wobei das zweite Ende einerseits auf abnehmbare Weise an dem ersten radialen Stegflansch (32) fixiert ist, und andererseits auf den Zentralmantel (31) der Ringträgerstruktur (3) aufgeschrumpft ist,
**dadurch gekennzeichnet, dass** das Verfahren zur Demontage vor der Demontage (940) des zumindest einen ringförmigen Flansches (33) von dem Zentralmantel (31) der Ringträgerstruktur (3) einen Schritt (920) der radialen Verformung der Ringträgerstruktur (3) durch Erwärmen des Zentralmantels (31) durch Anwendung einer Heizdecke umfasst, die den gesamten Umfangsverlauf der radial äußeren Oberfläche des Zentralmantels (31) einhüllt, und anschließend einen Schritt (950) des Abziehens des zumindest einen Flansches (33) von der Ringträgerstruktur (3).

6. Verfahren zur Demontage nach Anspruch 5, wobei der Schritt (920) der Erwärmung gehalten wird, bis die Temperatur des Zentralmantels (31) mehr als oder gleich 50 °C beträgt.

7. Verfahren zur Demontage nach einem der Ansprüche 5 oder 6, umfassend ferner gleichzeitig mit dem Schritt (920) der Erwärmung des Zentralmantels (31) einen Schritt (930) der Abkühlung des zumindest einen ringförmigen Flansches (33).

8. Verfahren zur Demontage nach einem der Ansprüche 5 bis 7, wobei der Schritt (930) der Abkühlung die Anwendung einer forcierten Konvektion mittels eines Ventilators umfasst, der auf den zumindest einen Flansch (33) zielt.

9. Verfahren zur Demontage nach einem der Ansprüche 5 bis 8, wobei der Schritt (930) der Abkühlung das Aufbringen von Trockeneis auf den zumindest einen Flansch (33) auf solche Weise umfasst, dass eine Schrumpfung des zumindest einen Flansches (33) erreicht wird.

10. Verfahren zur Demontage nach einem der Ansprüche 5 bis 9, wobei der Schritt (950) des Abziehens des zumindest einen Flansches (33) die Befestigung mehrerer erster Schrauben (92) in Gewindeöffnungen (94) des zumindest einen Flansches (33) umfasst, wobei die ersten Schrauben (92) an einer Abziehplatte (96) befestigt sind, anschließend das Inanschlagbringen von zweiten Schrauben (98) gegen einen Stegflansch der Ringträgerstruktur (3), wobei die zweiten Schrauben (98) mit Gewindeöffnungen (965) der Abziehplatte (96) in Eingriff stehen, anschließend die Betätigung der zweiten Schrauben (98), um die Abziehplatte (96) von der Ringträgerstruktur (3) auf eine Weise wegzubewegen, um den zumindest einen Flansch (33) der Ringträgerstruktur (3) abzuziehen.

11. Verfahren zur Demontage nach einem der Ansprüche 5 bis 10, wobei die Demontage der Ringanordnung in vertikaler Position in Bezug auf den Boden erfolgt, wobei der Turbinenring (1) und die Ringträgerstruktur (3) mit der axialen Richtung (D_{A}) des Rings parallel zu der vertikalen Richtung positioniert sind.

## Claims

1. A method for mounting a turbine ring assembly comprising a turbine ring (1) made of ceramic matrix composite material and a ring support structure (3) made of metal, provided with a central shroud (31) from which protrude a first and a second radial clamps (32, 36) from which the ring (1) is held, and with at least one annular flange (33) made in one piece disposed upstream of the turbine ring (1) and of the first radial clamp (32) relative to the direction of an air stream (F) intended to pass through the turbine ring assembly,
said at least one annular flange (33) having in the radial direction (D_{R}) a first free end (331) and a second end (332) opposite to the first end (331), said second end being, on the one hand, removably fixed to said first radial clamp (32) and, on the other hand, hooped onto the central shroud (31) of the ring support structure (3),
**characterized in that** the mounting method comprises, before the mounting (840) of said at least one annular flange (33) on the central shroud (31) of the ring support structure (3), a step (820) of radially deforming the ring support structure (3) by heating the central shroud (31) via an application of a heating cover encompassing the entire circumferential perimeter of the radially outer surface of the central shroud (31), then a step (840) of inserting said at least one flange (33) onto the ring support structure (3).

2. The mounting method according to claim 1, wherein the heating step (820) is maintained until the temperature of the central shroud is greater than or equal to 30°C.

3. The mounting method according to any of claims 1 or 2, further comprising, before the mounting (840) of said at least one annular flange (33) on the ring support structure (3), a step (830) of cooling said at least one annular flange (3) in order to obtain a constriction of said at least one annular flange (33).

4. The mounting method according to any of claims 1 to 3, wherein the mounting of the ring assembly is carried out in a vertical position relative to the ground, the turbine ring (1) and the ring support structure (3) being positioned with the axial direction (D_{A}) of the ring parallel to the vertical direction.

5. A method for dismounting a turbine ring assembly comprising a turbine ring (1) made of ceramic matrix composite material and a ring support structure (3) made of metal, equipped with a central shroud (31) from which protrude a first and a second radial clamps (32, 36) from which the ring (1) is held, and with at least one annular flange (33) made in one piece disposed upstream of the turbine ring (1) and of the first radial clamp (32) relative to the direction of an air stream (F) intended to pass through the turbine ring assembly,
said at least one annular flange (33) having in the radial direction (D_{R}) a first free end (331) and a second end (332) opposite to the first end (331), said second end being, on the one hand, removably fixed to said first radial clamp (32) and, on the other hand, hooped onto the central shroud (31) of the ring support structure (3),
**characterized in that** the dismounting method comprises, before the dismounting (940) of said at least one annular flange (33) of the central shroud (31) of the ring support structure (3), a step (920) of radially deforming the ring support structure (3) by heating the central shroud (31) via application of a heating cover encompassing the entire circumferential perimeter of the radially outer surface of the central shroud (31), then a step (950) of extracting said at least one flange (33) from the ring support structure (3).

6. The dismounting method according to claim 5, wherein the heating step (920) is maintained until the temperature of the central shroud (31) is greater than or equal to 50°C.

7. The dismounting method according to any of claims 5 or 6, further comprising, simultaneously with the step (920) of heating the central shroud (31), a step (930) of cooling said at least one annular flange (33).

8. The dismounting method according to any of claims 5 to 7, wherein the cooling step (930) comprises the application of a forced convection by means of a fan aiming said at least one flange (33).

9. The dismounting method according to any of claims 5 to 8, wherein the cooling step (930) comprises the application of dry ice on said at least one flange (33) so as to have a constriction of said at least one flange (33).

10. The dismounting method according to any of claims 5 to 9, wherein the step (950) of extracting said at least one flange (33) comprises a fixing of a plurality of first screws (92) in tapped orifices (94) of said at least one flange (33), the first screws (92) being secured to an extraction plate (96), then the pressing of second screws (98) against a clamp of the ring support structure (3), the second screws (98) being engaged with tapped orifices (965) of the extraction plate (96), then the actuation of the second screws (98) to move the extraction plate (96) away from the ring support structure (3) so as to extract said at least one flange (33) from the ring support structure (3).

11. The dismounting method according to any of claims 5 to 10, wherein the dismounting of the ring assembly is carried out in a vertical position relative to the ground, the turbine ring (1) and the ring support structure (3) being positioned with the axial direction (D_{A}) of the ring parallel to the vertical direction.
